# EUROPÄISCHE PATENTSCHRIFT

(11) **EP 1 151 875 B1**
(45) Veröffentlichungstag und Bekanntmachung des Hinweises auf die Patenterteilung: **17.05.2006**
(21) Anmeldenummer: 01106484.7
(22) Anmeldetag: 26.03.2001
(51) Int. Cl.: B60C 23/04, F16D 66/02

(54) **Verfahren und Einrichtung zur Bereitstellung von Signalen in Fahrzeugen**
Method and device for the providing of signals in vehicles
Procédé et appareil pour la mise à disposition de signaux dans des véhicules

(30) Priorität: 03.05.2000 DE 10021573
(43) Veröffentlichungstag der Anmeldung: 07.11.2001
(73) Patentinhaber: KNORR-BREMSE SYSTEME FÜR NUTZFAHRZEUGE GMBH, 80809 München (DE)
(72) Erfinder: Broch, Walter, 71679 Asperg (DE)

(56) Entgegenhaltungen:
- DE-A- 3 701 082
- DE-A- 19 634 715
- US-A- 5 054 315

## Beschreibung

Die Erfindung betrifft ein Verfahren und eine Einrichtung zur Bereitstellung von Signalen in einem Fahrzeug, insbesondere zur Aufbereitung von für das Fahrzeug wesentlichen Signalen.

Bei derartigen Verfahren und Einrichtungen, die beispielsweise dazu dienen, Parameter von Fahrzeugen, wie insbesondere die Radgeschwindigkeiten, Radlagertemperaturen, Verschleißzustand von Bremsbelägen und Verschleißzustand von Bremsscheiben sowie des Reifendruckes bereitzustellen, um diese zu überwachen, weiterzuverarbeiten oder anzuzeigen, werden üblicherweise die Signale von entsprechenden Sensoren erzeugt und zu einer Auswerteeinrichtung übertragen.

Dieses geschieht üblicherweise über Kabel, die von den Sensoren zu einem Steuergerät jeweils einzeln führen. Derartige konventionelle Verfahren und Einrichtungen zur Bereitstellung von Signalen in einem Fahrzeug benötigen demnach relativ viel Material in Form von Kabeln und Steckverbindungen und benötigen ferner einen erheblichen Zeitaufwand beim Einbau in die Fahrzeuge

Aus der Offenlegungsschrift DE 196 34 715 A1 ist eine Anordnung zur Erfassung des Drehverhaltens eines rotierenden Körpers oder Encoders umfassend ein Sensormodul mit einem Sensorelement aus einem oder mehreren sensorischen Einheiten bekannt, wobei das Sensormodul magnetisch mit dem Encoder gekoppelt ist. Das Sensorelement umfasst eine steuerbare Stromquelle, die einen das Drehverhalten darstellenden, eingeprägten Strom liefert, einen Modulator, der die Stromquelle in Abhängigkeit von Signalen des Sensorelements und von Signalen, die eine externe Signalquelle über einen zusätzlichen Anschluss liefert, steuert, und eine Auswerteschaltung.

Das Ausgangssignal des Sensormoduls ist ein das Drehverhalten darstellendes Signal, wobei die Drehzahlinformation in der Frequenz bzw. dem Abstand zwischen den aufsteigenden Flanken von Pulsen eingeschrieben sein kann, mit einem überlagerten Status- und/oder Zusatzsignal, das die Drehrichtung des rotierenden Körpers anzeigt.

Der Erfindung liegt die Aufgabe zugrunde, ein Verfahren zur Bereitstellung von Signalen in einem Fahrzeug, insbesondere zur Aufbereitung von für das Fahrzeug wesentlichen Signalen, wobei die Signale von wenigstens drei Sensoren erzeugt werden und wobei die Signale zu einer Auswerteeinrichtung übertragen werden, derart weiterzubilden, dass mit wenig Materialaufwand, kostengünstig und zuverlässig Signale bereitgestellt werden. Die Erfindung hat ferner die Aufgabe, eine Einrichtung zur Bereitstellung von Signalen in einem Fahrzeug, insbesondere einem Schienenfahrzeug, insbesondere zur Aufbereitung von für das Fahrzeug wesentlichen Signalen, umfassend wenigstens drei Sensoren, die Signale erzeugen, eine Übertragungsvorrichtung und eine Auswerteeinrichtung derart weiterzubilden, dass diese mit relativ wenig Materialaufwand kostengünstig herstellbar und in das jeweilige Fahrzeug einbaubar ist, wobei das Verfahren und die Einrichtung zuverlässig arbeiten sollen und damit zur Sicherheit des Fahrzeuges beitragen.

Gelöst wird diese Aufgabe durch ein Verfahren zur Bereitstellung von Signalen in einem Fahrzeug, insbesondere zur Aufbereitung von für das Fahrzeug wesentlichen Signalen, wobei die Signale von wenigstens drei Sensoren erzeugt werden und zu einem Übertragungssignal verknüpft werden, das über einen Übertragungsweg zu einer Auswerteeinrichtung übertragen wird, wobei die in den jeweiligen Signalen enthaltenen Informationen in der Auswerteeinrichtung in einzelne Informationen aufgelöst werden, das dadurch weitergebildet ist, dass eines der Signale in dem Übertragungssignal ein Trägersignal ist, auf das die wenigstens zwei weiteren Signale aufmoduliert werden, wobei wenigstens eine Information aus dem Flankenabstand, der Flankenbreite oder dem Abstand der Minima oder Maxima des Trägersignals und wenigstens eine weitere Information aus der Amplitude des Trägersignals ableitbar ist.

Durch Verknüpfung der Signale zu einem Übertragungssignal vor Übertragung der Signale ist es möglich, nur einen Übertragungsweg zu verwenden, wodurch schon eine erhebliche Menge an Kabel eingespart werden kann. Hierdurch wird auch die Montagezeit eines entsprechenden Fahrzeuges bzw. der hierzu relevanten Komponenten deutlich verringert. Der Übertragungsweg kann bevorzugterweise ein einadriges oder ein zweiadriges Kabel sein oder ferner eine Funkstrecke oder eine Ultraschall- oder Infrarotstrecke. Bei Verwendung eines einadrigen Kabels, wird die Fahrzeugkarosserie als Masse verwendet, wohingegen die Verwendung eines zweiadrigen Kabels zu weniger Störungen im Vergleich zu einem einadrigen Kabel führt.

Dabei stellt eines der Signale in dem Übertragungssignal ein Trägersignal dar, auf das weitere Signale aufmoduliert werden. Bevorzugterweise wird das Trägersignal von einem Sensor direkt oder nach dem Sensor verstärkt zur Verfügung gestellt. Hierdurch ist es relativ einfach möglich, die in den jeweiligen Signalen enthaltenen Informationen nach Empfang in der Auswerteeinrichtung entsprechend in einzelne Informationen aufzulösen, so dass diese dann zur Steuerung und/oder Regelung des Fahrzeugs und/oder zu Anzeigeeinrichtungen weitergeleitet werden können.

Vorzugsweise ist das Trägersignal ein Rechtecksignal, insbesondere ein von einem Drehzahlsensor erzeugtes Rechtecksignal. Als Drehzahlsensoren kommen bevorzugterweise Impulsgeber mit Polrädern in Frage, die in beispielsweise der Nabe von Radlagern eingebaut sind. Hierdurch lassen sich dann beispielsweise Radgeschwindigkeiten erfassen. Die Impulsgeber umfassen vorzugsweise ein induktives Element oder einen Hall-Sensor.

Beim erfindungsgemäßen Verfahren werden wenigstens zwei Signale in das Trägersignal derart aufmoduliert, dass wenigstens eine Information aus dem Flankenabstand, der Flankenbreite oder dem Abstand der Minima oder Maxima des Trägersignals und wenigstens eine weitere Information aus der Amplitude des Trägersignals ableitbar ist. Ein weiteres Signal kann beispielsweise ein Analogwert sein, der eine Radlagertemperatur angibt und von beispielsweise einem Thermoelement oder einem Pyrometer herrührt. Dieses wäre dann eine Spannung, die beispielsweise in dem Trägersignal als Amplitude versteckt oder moduliert wird. Hierzu wird vorzugsweise ein Multiplizierer verwendet. Wenn davon auszugehen ist, dass die Amplitude, beispielsweise eines Rechtecksignals des Trägersignals ursprünglich ein Volt beträgt und die Spannung eines Thermoelements zwischen 0,1 bis 0,5 Volt für Temperaturen zwischen 0 °C und beispielsweise 200 °C beträgt, könnte beispielsweise die Thermoelementspannung mit dem Trägersignal multipliziert werden, wodurch sich Amplituden von 0,1 Volt bis 0,5 Volt ergeben würden. Um entsprechende Störungen möglichst zu minimieren, könnte durch einen Verstärker im Vorwege die Thermoelementspannung verstärkt werden.

Vorzugsweise enthält das wenigstens eine weitere Signal Informationen über die Belagstärke einer Radbremse und/oder der Temperatur des Radlagers. Die Belagstärke einer Bremse könnte beispielsweise vorzugsweise mit einem Drehpotentiometer erfasst werden, um den Verschleiß des Belages einer Bremse zu messen.

Erfindungsgemäß ist eine Einrichtung zur Bereitstellung von Signalen in einem Fahrzeug, insbesondere zur Aufbereitung von für das Fahrzeug wesentlichen Signalen, umfassend wenigstens drei Sensoren, die Signale erzeugen, eine Übertragungsvorrichtung und eine Auswerteeinrichtung, wobei zwischen der Übertragungsvorrichtung und den Sensoren eine Verknüpfungsvorrichtung zum Verknüpfen der die Signale der Sensoren in ein Übertragungssignal vorgesehen ist, das über die Übertragungsvorrichtung übertragbar ist und wobei in der Auswerteeinrichtung die in den jeweiligen Signalen enthaltenen Informationen in einzelne Informationen auflösbar sind, die dadurch weitergebildet ist, dass eines der Signale ein Trägersignal ist und die Verknüpfungsvorrichtung zur Modulierung wenigstens einer Information auf den Flankenabstand, die Flankenbreite oder den Abstand der Minima oder Maxima des Trägersignals und wenigstens einer weiteren Information auf die Amplitude des Trägersignals ausgebildet ist.

Vorzugsweise umfasst die Übertragungsvorrichtung ein einadriges oder zweiadriges Kabel, wobei das eine Übertragungssignal über das Kabel übertragbar ist. Vorzugsweise umfasst die Übertragungsvorrichtung einen Sender und einen Empfänger. Durch diese Maßnahme kann vorzugsweise noch mehr Einbauzeit gespart werden, da ein Teil des Verbindungskabels, das zur Übertragung der Signale von beispielsweise einem Rad eines Fahrzeugs zu einer Auswerteeinrichtung oder einer elektronischen Regel- und Steuereinheit dient, gespart wird. Der Sender und der Empfänger arbeiten bevorzugterweise im Infrarotbereich, im Ultraschallbereich oder im Hochfrequenzbereich. Wenn vorzugsweise die Auswerteeinrichtung eine elektronische Regel- und/oder Steuereinheit umfasst, kann diese als Baueinheit schnell und kostengünstig montiert werden. Wenn vorzugsweise die Auswerteeinrichtung einen Wandler umfasst, der eine Frequenz oder einen Takt in eine Spannung wandelt, ist die Weiterverarbeitung wenigstens eines Signals vereinfacht. Vorzugsweise umfasst die Auswerteeinrichtung einen Analog-Digital-Wandler. Durch diese bevorzugte Ausführungsform können die in dem bzw. den Signalen enthaltenen Informationen digital verarbeitet werden.

Vorzugsweise ist vor der Verknüpfungsvorrichtung wenigstens eine Signalaufbereitungsvorrichtung zur Aufbereitung wenigstens eines Signals eines Sensors vorgesehen. Durch die Signalaufbereitungsvorrichtung ist es möglich Störungen bei relativ kleinen Pegeln der Signale aus den Sensoren auf dem Übertragungsweg zu minimieren. Hierzu wird bevorzugterweise das jeweilige Signal verstärkt. Vorzugsweise sind die Sensoren Drehzahlsensoren, Temperatursensoren und/oder Belagsensoren bzw. Belagsverschleißsensoren. Die Drehzahlsensoren können bevorzugterweise Drehzahlfühler sein, die induktiv magnetisch oder als Hall-Sensoren ausgestaltet sind. Die Temperatursensoren können beispielsweise ein Thermoelement oder ein Pyrometer sein oder ein PT 100. Der Belagsensor bzw. Belagverschleißsensor kann ein Resonator sein, ein Schwingkreis oder ein Drehpotentiometer, das sich je nach Verschleiß beispielsweise eines Bremsklotzes nachregelt, so dass der Widerstand über dieses Drehpotentiometer sich mit dem Grad des Verschleißes ändert.

Vorzugsweise umfasst die Verknüpfungsvorrichtung zur Variation der Amplitude des Trägersignals einen analogen Multiplizierer, ferner vorzugsweise umfasst die Verknüpfungsvorrichtung ein Signalhaltemittel. Das Signalhaltemittel dient dazu, bei einem beispielsweise gleichmäßigen Rechtecksignal die Pulsweite modulieren zu können. Hierbei wird die Spannung der Amplitude beispielsweise bei unterschiedlich hoch anliegenden Spannungen, die beispielsweise von einem Belagverschleißsensor herrühren, verlängert oder verkürzt.

Es ist im Rahmen dieser Erfindung möglich, drei Signale von drei Sensoren miteinander zu verknüpfen und über einen Übertragungsweg zu übertragen. Bei Verwendung von drei Signalen bzw. drei Informationen, die in entsprechenden Signalen enthalten sind, ist es möglich, die erste Information in der Frequenz abzubilden, die zweite Information im Tastverhältnis bzw. in dem Abstand der jeweiligen Maxima oder in dem Flankenabstand und die dritte Information in der Amplitude, beispielsweise des ersten Signals, das in der Frequenz abgebildet ist. Selbst in der Pulsweite, die mittels Pulsweitenmodulation variiert werden kann, können weitere Frequenzen überlagert werden, so dass noch mehr Informationen übertragbar sind.

Die Erfindung wird nachstehend ohne Beschränkung des allgemeinen Erfindungsgedankens anhand von Ausführungsbeispielen unter Bezugnahme auf die Zeichnungen exemplarisch beschrieben, auf die im übrigen bezüglich der Offenbarung aller im Text nicht näher erläuterten erfindungsgemäßen Einzelheiten ausdrücklich verwiesen wird. Es zeigen:
- Fig. 1: ein Blockdiagramm einer Einrichtung mit zwei Sensoren
- Fig. 2: ein Blockdiagramm einer Ausführungsform der erfindungsgemäßen Einrichtung
- Fig. 3: eine schematische Darstellung von Bremskomponenten eines Rads eines Fahrzeugs
- Fig. 4: a) ein Übertragungssignal schematisch, bei dem das Trägersignal eine Rechteckspannung ist und
b) schematisch das Übertragungssignal, bei dem das Trägersignal ein Cosinus ist.

In den folgenden Figuren sind jeweils gleiche oder entsprechende Teile mit denselben Bezugszeichen bezeichnet, so dass auf eine erneute Vorstellung verzichtet wird und lediglich die Abweichung der in diesen Figuren dargestellten Ausführungsbeispiele gegenüber dem ersten Ausführungsbeispiel erläutert werden.

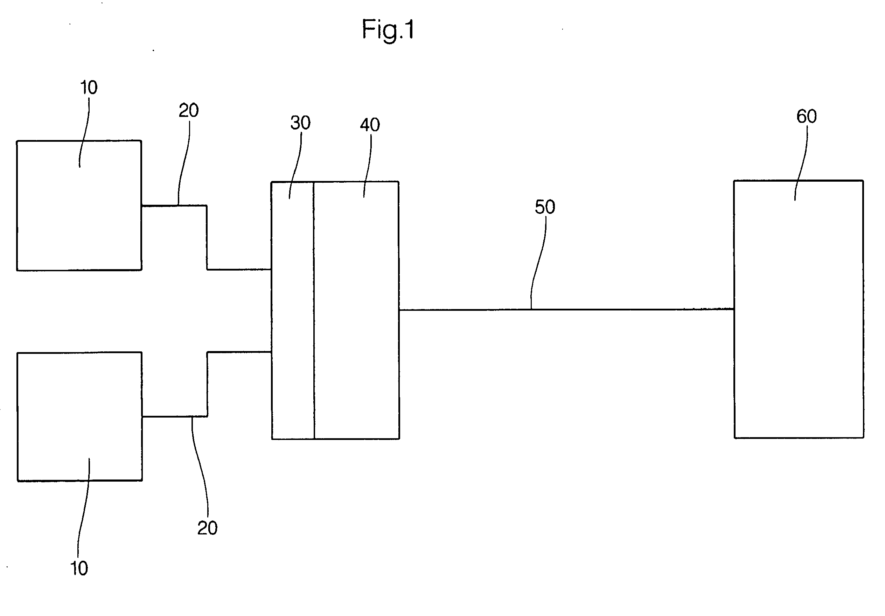

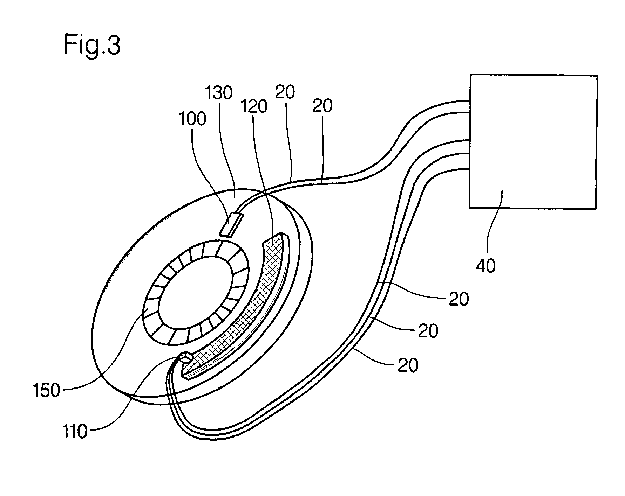

Fig. 1 zeigt schematisch eine Einrichtung zur Bereitstellung von Signalen in einem Schienenfahrzeug in einer Blockdiagrammdarstellung. Es sind zwei Sensoren 10 dargestellt, deren Signale über Kabel 20 zu einer Signalaufbereitungsvorrichtung 30 geführt werden. In der Signalaufbereitungsvorrichtung 30 werden die Signale beispielsweise verstärkt und/oder in ein Spannungssignal umgewandelt. Die Sensoren 10 können hierbei beispielsweise jeweils ein Drehzahlfühler sein, der zur Erfassung von Radgeschwindigkeiten Verwendung findet. Hierbei werden heutzutage beispielsweise Impulsgeber mit Polrädern verwendet. Ein Polrad 150 ist beispielsweise in Fig. 3 schematisch dargestellt.

Ferner kann zur Erfassung der Radlagertemperatur ein Temperaturfühler eingesetzt werden. Schließlich kann ein Bremsbelagverschleißsensor Verwendung finden, der beispielsweise ein Potentiometer ist, das sich je nach Verschleißgrad eines Bremsklotzes nachregelt und somit einen sich verändernden Widerstand aufweist. Die Sensoren können beispielsweise in einer Baueinheit mit oder ohne Signalaufbereitungsvorrichtung angeordnet sein.

Nach der Signalaufbereitungsvorrichtung 30 ist eine Verknüpfungsschaltung 40 in Fig. 1 dargestellt, die die Signale, und insbesondere die aufbereiteten Signale in diesem Ausführungsbeispiel miteinander verknüpft. Hierbei wird beispielsweise ein Rechtecksignal, das durch beispielsweise den Drehzahlfühler ausgegeben wird durch das weitere Signal des anderen Sensors beispielsweise in der Amplitude verändert. Hierbei ändert sich die Dynamik und Charakteristik des Signals des Drehzahlfühlers an sich nicht. Das so verknüpfte Signal wird über ein Übertragungskabel 50 zu einer Auswerteeinrichtung 60 geleitet, die beispielsweise eine Steuereinheit aufweist. In der Auswerteeinrichtung 60 werden die Signale, die auf einem Übertragungsweg verknüpft übertragen wurden, wieder aufgeteilt in einzelne Signale, die dann zur weiteren Verarbeitung Verwendung finden können. Diese Weiterverarbeitung findet beispielsweise in einer Steuereinheit statt, mittels der beispielsweise wesentliche Parameter des Fahrzeugs wie Bremsbelagsdicke und/oder Radgeschwindigkeit, überwacht werden und gegebenenfalls zur Anzeige oder zur Weiterverarbeitung weitergeleitet werden.

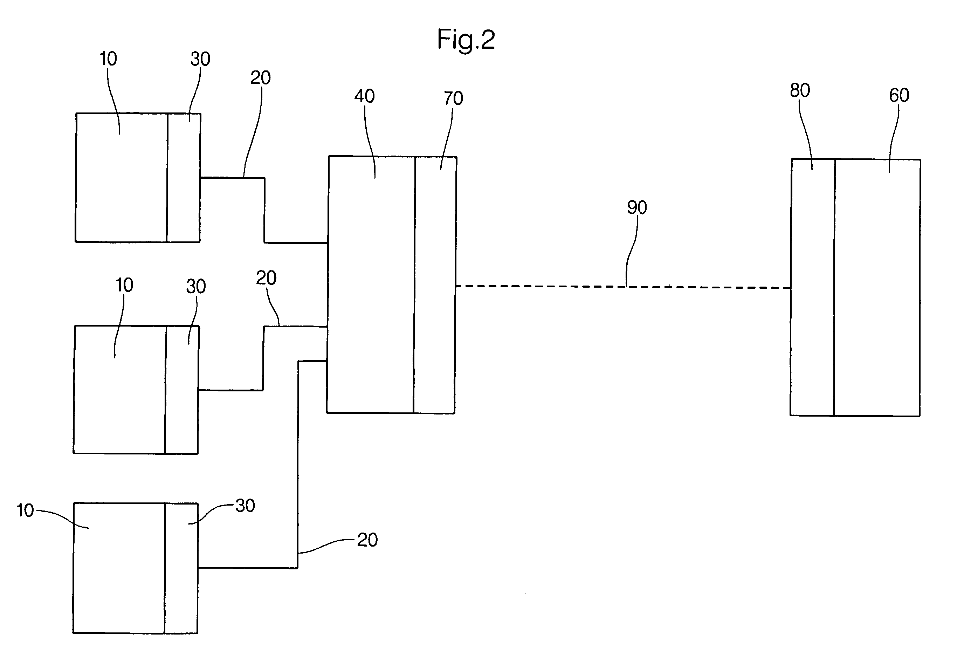

In Fig. 2 sind anstelle von zwei Sensoren 10 erfindungsgemäß drei Sensoren 10 dargestellt, die direkt Signalaufbereitungsvorrichtungen 30 in unmittelbarer Nachbarschaft und/oder einer Baueinheit aufweisen. Die derart aufbereiteten Signale werden dann über Kabel 20 zu der Verknüpfungsschaltung 40 geführt. Von der Verknüpfungsschaltung 40 wird über einen Sender 70 das Übertragungssignal über eine Übertragungsstrecke 90 zu einem Empfänger 80 gesendet, der dann das übertragene Signal zur Auswerteeinrichtung 60 weiterleitet. Hierbei können beispielsweise die Sensoren mit Signalaufbereitungsvorrichtung als Baueinheit ausgestaltet sein oder insgesamt als Baueinheit ausgestaltet sein und zwar insbesondere auch zusammen mit den Kabeln 20, der Verknüpfungsschaltung 40 und dem Sender 70. Schließlich kann der Empfänger 80 mit der Auswerteeinrichtung 60 als Baueinheit vorgesehen sein.

In Fig. 3 sind schematisch die wesentlichen Elemente einer Bremsvorrichtung dargestellt Es ist ein Drehzahlfühler 100 dargestellt, der in Wirkverbindung mit einem Polrad 150 steht und so beispielsweise magnetisch das Fortschreiten des Polrades 150 misst und ein entsprechendes Signal über die Kabel 20 zur Verknüpfungsschaltung 40 leiten kann. Ferner ist ein Belagverschleißsensor 110 dargestellt, der in unmittelbarer Umgebung eines Bremsklotzes 120 angeordnet ist und beispielsweise als ein Potentiometer ausgestaltet sein kann. Die jeweiligen Widerstände aus dem Potentiometer werden durch Anlegen einer Spannung in entsprechende Spannungen aufgeteilt, die dann über Kabel 20 in die Verknüpfungsschaltung 40 geleitet werden. Ferner ist in der Fig. 3 eine Bremsscheibe 130 dargestellt.

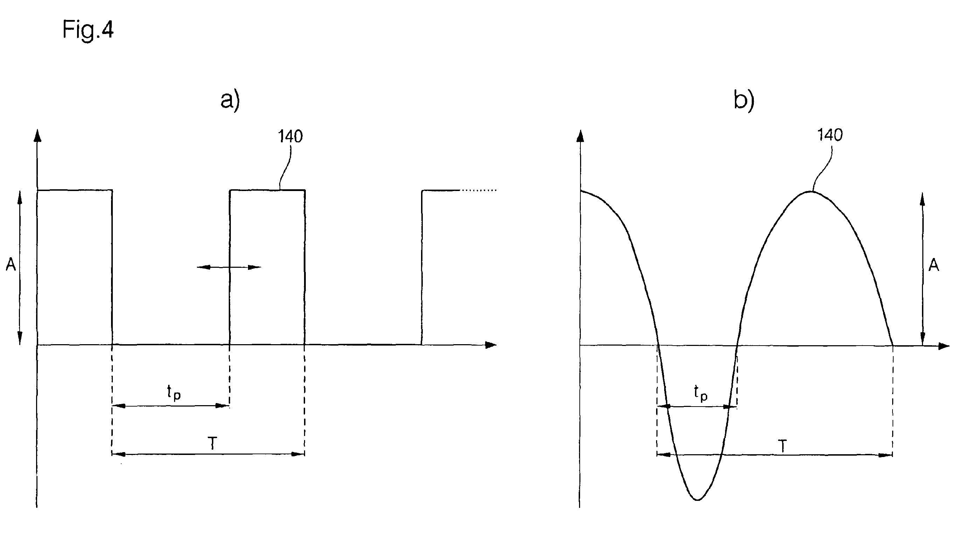

Fig. 4 zeigt das übertragene Signal, wobei das Trägersignal des übertragenen Signals ein Rechteckimpuls ist und Fig. 4 (b) zeigt auch das übertragene Signal 140, wobei das Trägersignal ein Cosinus ist. In der Fig. 4 ist die jeweilige Amplitude A dargestellt und ferner der Flankenabstand tₚ und die Periode T. In diesem Diagramm ist somit die Stärke des Signals über der Zeit aufgetragen. In Fig. 4 (a) ist durch Pfeile, die parallel zur Abszisse dargestellt sind und von einer Flanke des Rechtecksignals weg zeigen, dargestellt, dass diese Flanke je nach Größe des aufmodulierten Signals nach links oder nach rechts verschoben ist.

Somit ist eine Einsparung von Datenleitungen möglich, da ein vorhandener Signalweg Verwendung findet, in dem insbesondere ein periodisches Signal durch weitere Signale moduliert wird, wobei die weiteren Signale in beispielsweise der Amplitude und/oder der Pulsweite eine Codierung finden. Bei Verwendung einer Modulation in der Pulsweite ist es möglich die Auswerteschaltung bzw. Auswerteeinrichtung 60 einfach zu gestalten, da bei geeigneter Auswertung des Frequenzsignals das digitale Abbild des in der Pulsweite versteckten analogen Signals ohne weiteres abfällt. Somit ist es möglich Informationen über die Radgeschwindigkeit, eine Radlagertemperatur und/oder den Bremsbelagverschleiß und/oder weiteren wesentlichen Parametern über einen Übertragungsweg bzw. ein Kabel mit ein oder zwei Leitern zu zu übermitteln.

In einer weiteren Ausführungsform wird wenigstens ein von einem Sensor erzeugtes analoges Signal durch Verwendung eines Pulsgenerators in einen Puls umgewandelt. Dieser Puls wird dann auf das Trägersignal aufmoduliert oder dient selbst als Trägersignal.

### Bezugszeichenliste

- 10: Sensor
- 20: Kabel
- 30: Signalaufbereitungsvorrichtung
- 40: Verknüpfungsschaltung
- 50: Übertragungskabel
- 60: Auswerteeinrichtung
- 70: Sender
- 80: Empfänger
- 90: Übertragungsstrecke
- 100: Drehzahlfühler
- 110: Belagverschleißsensor
- 120: Bremsklotz
- 130: Bremsscheibe
- 140: Übertragungssignal
- 150: Polrad
- A: Amplitude
- T: Periode
- tₚ: Flankenabstand

## Patentansprüche

1. Verfahren zur Bereitstellung von Signalen in einem Fahrzeug, insbesondere zur Aufbereitung von für das Fahrzeug wesentlichen Signalen, wobei die Signale von wenigstens drei Sensoren (10) erzeugt werden und zu einem Übertragungssignal (140) verknüpft werden, das über einen Übertragungsweg (50, 90) zu einer Auswerteeinrichtung (60) übertragen wird, wobei die in den jeweiligen Signalen enthaltenen Informationen in der Auswerteeinrichtung (60) in einzelne Informationen aufgelöst werden, **dadurch gekennzeichnet, dass** eines der Signale in dem Übertragungssignal (140) ein Trägersignal ist, auf das die wenigstens zwei weiteren Signale aufmoduliert werden, wobei wenigstens eine Information aus dem Flankenabstand, der Flankenbreite oder dem Abstand der Minima oder Maxima des Trägersignals und wenigstens eine weitere Information aus der Amplitude des Trägersignals ableitbar ist.

2. Verfahren nach Anspruch 1, **dadurch gekennzeichnet, dass** das Trägersignal ein Rechtecksignal, insbesondere ein von einem Drehzahlsensor (100) erzeugtes Rechtecksignal ist.

3. Verfahren nach Anspruch 1 oder 2, **dadurch gekennzeichnet, dass** das wenigstens eine weitere Signal Informationen über die Belagstärke einer Bremse und/oder einer Temperatur des Lagers eines Rads enthält.

4. Einrichtung zur Bereitstellung von Signalen in einem Fahrzeug, insbesondere zur Aufbereitung von für das Fahrzeug wesentlichen Signalen, umfassend wenigstens drei Sensoren (10), die Signale erzeugen, eine Übertragungsvorrichtung (50; 70, 80, 90) und eine Auswerteeinrichtung (60), wobei zwischen der Übertragungsvorrichtung (50; 70, 80, 90) und den Sensoren (10) eine Verknüpfungsvorrichtung (40) zum Verknüpfen der Signale der Sensoren (10) in ein Übertragungssignal (140) vorgesehen ist, das über die Übertragungsvorrichtung (50; 70, 80, 90) übertragbar ist und wobei in der Auswerteeinrichtung die in den jeweiligen Signalen enthaltenen Informationen in einzelne Informationen auflösbar sind, **dadurch gekennzeichnet, dass** eines der Signale ein Trägersignal ist und die Verknüpfungsvorrichtung (40) zur Modulierung wenigstens einer Information auf den Flankenabstand, die Flankenbreite oder den Abstand der Minima oder Maxima des Trägersignals und wenigstens einer weiteren Information auf die Amplitude des Trägersignals ausgebildet ist.

5. Einrichtung nach Anspruch 4, **dadurch gekennzeichnet, dass** die Übertragungsvorrichtung (50; 70, 80, 90) ein einadriges oder zweiadriges Kabel (50) umfasst, wobei das eine Übertragungssignal (14) über das Kabel (50) übertragbar ist.

6. Einrichtung nach Anspruch 4, **dadurch gekennzeichnet, dass** die Übertragungsvorrichtung (50; 70, 80 ,90) einen Sender (70) und einen Empfänger (80) umfasst.

7. Einrichtung nach einem der Ansprüche 4 bis 6, **dadurch gekennzeichnet, dass** die Auswerteeinrichtung (60) eine elektronische Regel- und/oder Steuereinheit umfasst.

8. Einrichtung nach einem der Ansprüche 4 bis 7, **dadurch gekennzeichnet, dass** die Auswerteeinrichtung (60) einen Wandler umfasst, der eine Frequenz oder einen Takt in eine Spannung wandelt.

9. Einrichtung nach einem der Ansprüche 4 bis 8, **dadurch gekennzeichnet, dass** die Auswerteeinrichtung (60) einen Analog-Digital-Wandler umfasst.

10. Einrichtung nach einem der Ansprüche 4 bis 9, **dadurch gekennzeichnet, dass** vor der Verknüpfungsvorrichtung (40) wenigstens eine Signalaufbereitungsvorrichtung (30) zur Aufbereitung wenigstens eines Signals eines Sensors (10) vorgesehen ist.

11. Einrichtung nach einem der Ansprüche 4 bis 10, **dadurch gekennzeichnet, dass** die Sensoren (10) Drehzahlsensoren, Temperatursensoren und/oder Reifendrucksensoren und/oder Belagverschleißsensoren sind.

12. Einrichtung nach einem der Ansprüche 4 bis 11, **dadurch gekennzeichnet, dass** die Verknüpfungsvorrichtung (40) zur Variation der Amplitude (A) des Trägersignals einen analogen Multiplizierer umfasst.

13. Einrichtung nach einem der Ansprüche 4 bis 12, **dadurch gekennzeichnet, dass** die Verknüpfungsvorrichtung (40) ein Signalhaltemittel umfasst.

## Claims

1. Method of providing signals in a vehicle, in particular for processing signals essential for the vehicle, wherein the signals are generated by at least three sensors (10) and logically linked to form a transmission signal (140) that is transmitted along a transmission path (50, 90) to an analyser means (60), with the information contained in the respective signals being dissolved in said analyser means (60) to form individual bits of information, **characterised in that** one of said signals in said transmission signal (140) is a carrier signal onto which said at least two further signals are modulated, with at least one bit of information being suitable for derivation from the edge spacing, the edge width or the spacing of the minimums or maximums of said carrier signal and with at least one further bit of information being suitable for derivation from the amplitude of said carrier signal.

2. Method according to Claim 1, **characterised in that** said carrier signal is a rectangular signal, in particular a rectangular signal generated by a speed sensor (100).

3. Method according to Claim 1 or 2, **characterised in that** said at least one further signal contains information about the thickness of the lining of a brake and/or a temperature of the bearing of a wheel.

4. Device for providing signals in a vehicle, in particular for processing signals essential for the vehicle, comprising at least three sensors (10) generating signals, a transmitter device (50; 70, 80, 90) and an analyser means (60), wherein a logic linking means (40) is provided between said transmitter device (50; 70, 80, 90) and said sensors (10) for logically linking the signals of said sensors (10) so as to form a transmission signal (140) that is suitable for transmission via said transmitter device (50; 70, 80, 90) and wherein the information contained in the respective signals can be dissolved in said analyser means into individual bits of information, **characterised in that** one of said signals is a carrier signal and said logic linking means (40) is configured for modulating at least one bit of information onto the edge spacing, the edge width or the spacing of the minimums or maximums of said carrier signal and at least one further bit of information onto the amplitude of said carrier signal

5. Device according to Claim 4, **characterised in that** said transmitter device (50; 70, 80, 90) comprises a single-core or twin-core cable (50), with said one transmission signal (14) being provided for transmission along said cable (50).

6. Device according to Claim 4, **characterised in that** said transmitter device (50; 70, 80, 90) comprises a transmitter (70) and a receiver (80).

7. Device according to any of the Claims 4 to 6, **characterised in that** said analyser means (60) comprises an electronic closed-loop and/or open-loop control unit.

8. Device according to any of the Claims 4 to 7, **characterised in that** said analyser means (60) comprises a converter that converts a frequency or a clock cycle into a voltage.

9. Device according to any of the Claims 4 to 8, **characterised in that** said analyser means (60) comprises an analogue-digital converter.

10. Device according to any of the Claims 4 to 9, **characterised in that** at least one signal-processing device (30) is provided upstream of said logic linking means (40) for processing at least one signal from a sensor (10).

11. Device according to any of the Claims 4 to 10, **characterised in that** said sensors (10) are speed sensors, temperature sensors and/or tyre pressure gauges and/or brake-lining wear sensors.

12. Device according to any of the Claims 4 to 11, **characterised in that** said logic linking means (40) comprises an analogue multiplier for varying the amplitude (A) of said carrier signal.

13. Device according to any of the Claims 4 to 12, **characterised in that** said logic linking means (40) comprises signal-holding means.

## Revendications

1. Procédé à mettre à disposition des signaux dans un véhicule, en particulier pour le traitement des signaux essentiels pour le véhicule, dans lequel les signaux sont engendrés par au moins trois détecteurs (10) et sont enchaînés de façon à former un signal de transmission (140) qui est émis le long d'une voie de transmission (50, 90) à un moyen analyseur (60), aux informations contenues dans les signaux respectifs étant dissolues dans ledit moyen analyseur (60) de façon à former des informations individuelles, **caractérisé en ce qu'**un desdits signaux dans ledit signal de transmission (140) est un signal porteur, sur lequel lesdits au moins deux autres signaux sont modulés, à au moins une information étant dérivable de l'espacement entre flancs, de la largeur des flancs ou de l'espacement entre les minimums ou maximums dudit signal porteur et à au moins une autre information étant dérivable des l'amplitude dudit signal porteur.

2. Procédé selon la revendication 1, **caractérisé en ce que** ledit signal porteur est un signal rectangulaire, en particulier un signal rectangulaire engendré par un capteur de vitesse de roue (100).

3. Procédé selon la revendication 1 ou 2, **caractérisé en ce que** ledit au moins autre signal contient des informations relatives à l'épaisseur de la garniture de frein et/ou une température du logement d'une roue.

4. Dispositif à mettre à disposition des signaux dans un véhicule, en particulier pour le traitement des signaux essentiels pour le véhicule, comprenant au moins trois détecteurs (10) à engendrer des signaux, un dispositif émetteur (50; 70, 80, 90) et un moyen analyseur (60), dans lequel un moyen logique d'enchaînement (40) est disposé entre ledit dispositif émetteur (50; 70, 80, 90) et lesdits détecteurs (10) pour l'enchaînement logique des signaux desdits détecteurs (10) en formant un signal de transmission (140) apte à être transmis via ledit dispositif émetteur (50; 70, 80, 90) et dans lequel les informations contenues dans les signaux respectifs sont aptes à être dissolues dans lequel moyen analyseur en informations individuelles, **caractérisé en ce qu'**un desdits signaux est un signal porteur et ledit moyen logique d'enchaînement (40) est configuré de façon à moduler au moins une information sur l'espacement entre flancs, sur la largeur des flancs ou sur l'espacement entre les minimums ou maximums dudit signal porteur et au moins une autre information sur l'amplitude dudit signal porteur

5. Dispositif selon la revendication 4, **caractérisé en ce que** ledit dispositif émetteur (50; 70, 80, 90) comprend un câble à un seul conducteur ou un câble à deux conducteurs (50), audit un signal de transmission (14) étant apte à être transmis le long ledit câble (50).

6. Dispositif selon la revendication 4, **caractérisé en ce que** ledit dispositif émetteur (50; 70, 80, 90) comprend un émetteur (70) et un récepteur (80).

7. Dispositif selon une quelconque des revendications 4 à 6, **caractérisé en ce que** ledit moyen analyseur (60) comprend une unité électronique de réglage ou de commande.

8. Dispositif selon une quelconque des revendications 4 à 7, **caractérisé en ce que** ledit moyen analyseur (60) comprend un convertisseur à convertir une fréquence ou une cadence d'horloge en une tension.

9. Dispositif selon une quelconque des revendications 4 à 8, **caractérisé en ce que** ledit moyen analyseur (60) comprend un convertisseur analogique-numérique.

10. Dispositif selon une quelconque des revendications 4 à 9, **caractérisé en ce qu'**au moins un dispositif de traitement de signaux (30) est connecté en amont dudit moyen logique d'enchaînement (40) à traiter au moins un signal provenant d'un détecteur (10).

11. Dispositif selon une quelconque des revendications 4 à 10, **caractérisé en ce que** lesdits détecteurs (10) sont des capteurs de vitesse de roue, des sondes de température et/ou des capteurs de pression des pneu et/ou des palpeurs de contrôle de l'usure des garnitures de freins.

12. Dispositif selon une quelconque des revendications 4 à 11, **caractérisé en ce que** ledit moyen logique d'enchaînement (40) comprend un multiplicateur analogique à varier l'amplitude (A) dudit signal porteur.

13. Dispositif selon une quelconque des revendications 4 à 12, **caractérisé en ce que** ledit moyen logique d'enchaînement (40) comprend des moyens de maintien de signal.
